# EUROPEAN PATENT SPECIFICATION

(11) **EP 2 941 555 B1**
(45) Date of publication and mention of the grant of the patent: **29.05.2019**
(21) Application number: 13808186.4
(22) Date of filing: 12.12.2013
(51) Int. Cl.: F02B 33/40, F02B 39/10

(54) **A COMPRESSING DEVICE WITH THERMAL PROTECTION**
KOMPRESSIONSVORRICHTUNG MIT WÄRMESCHUTZ
DISPOSITIF DE COMPRESSION AVEC PROTECTION THERMIQUE

(30) Priority: 17.12.2012 GB 201222704
(43) Date of publication of application: 11.11.2015
(73) Proprietor: Valeo Air Management UK Limited, Redditch, Worcestershire B98 0DZ (GB)
(72) Inventor: KNIGHT, Stephen Michael, Basildon Essex SS14 3WN (GB)
(74) Representative: Abel & Imray
(86) International application number: PCT/GB2013/053278
(87) International publication number: WO 2014/096786

(56) References cited:
- EP-A1- 2 163 747
- DE-A1- 19 845 375
- DE-A1-102006 024 420
- DE-A1-102009 024 679
- DE-A1-102010 027 220
- DE-U1-202005 006 522

## Description

### Technical Field

The present invention relates to compressing devices such as superchargers, and to apparatus comprising two compressing devices for supplying an engine with a compressed air charge.

### Background of the Invention

As a result of the desire to reduce carbon dioxide emissions from internal combustion (IC) engines, there is a tendency towards smaller (i.e. reduced capacity) engines. In order to maintain acceptable levels of power output, it has been suggested that a turbocharger be fitted to these smaller engines. Whilst the turbocharger may increase the maximum power output of the engine, it has been found to cause unacceptable levels of turbo-lag, often making the engine impractical in automotive applications. Installing a supercharger upstream or downstream of the turbocharger (i.e. between the turbocharger and the engine) has been suggested as a way of reducing this problem of excessive turbo lag. However, in such an arrangement, the downstream compressing device is subjected to especially high temperatures because it receives hot input gases from the upstream compressing device. This can damage the downstream compressing device and/or restrict the type/design of device that can be used in such an arrangement.

DE102006024420 (GM GLOBAL TECH OPERATIONS INC) relates to a controlling unit that supplies a higher air pressure available in the air intake of the engine. The engine is regulated by an engine regulated module. The regulation unit receives a regulation signal from the engine regulated module which displays the required air intake pressure to the engine and receives a pressure signal from the pre supercharger system. This represents an instantaneous air pressure produced in the pre supercharger system and regulates the function of the pre supercharger in reference of the control signal and air pressure signal.

DE19845375 (ASEA BROWN BOVERI) relates to an indirect cooling process that involves the use of water to cool the stator part adjacent to the radial gap between the stator and the rotor. There is either a recess in the interior of the stator part adjacent to the radial gap, or a cavity in the stator part. The recess or cavity has an input line and also an output line for the water.

### Summary of the Invention

According to a first aspect of the invention there is provided an electric supercharger for supplying an internal combustion engine with a compressed air charge, wherein the electric supercharger comprises a compressor wheel, a bearing assembly for supporting rotation of the compressor wheel, an electric drive assembly for driving the compressor wheel, a seal arranged such that the electric drive assembly is sealed from the compressed air charge, and a labyrinth seal, wherein the labyrinth seal is arranged to thermally shield the seal and bearing assembly from the heat of the compressed air charge, the labyrinth seal comprising a stationary part interlocking with a movable part to define a labyrinth therebetween, characterised in that the movable part is arranged on the rear of the compressor wheel such that the movable part is rotatable relative to the stationary part; the labyrinth seal is a radial labyrinth seal, the radially outermost side of the labyrinth seal being exposed to the compressed charge, arranged such that the fluid received into a radially outermost side of the labyrinth seal is at a first temperature and fluid leaving the radially innermost side of the labyrinth seal is at a second temperature, the second temperature being lower than the first, and wherein the seal is a face seal.

Optionally the movable part is integral with the rear face of the compressor wheel.

According to a second aspect of the invention there is provided an apparatus for supplying an internal combustion engine with a compressed air charge, the apparatus comprising a turbocharger and an electric supercharger according to the first aspect of the invention, the electric supercharger being downstream of the turbocharger and being arranged to compress the output of the turbocharger into the compressed air charge. According to a third aspect of the invention there is provided an internal combustion engine in combination with the electric supercharger of the first aspect of the invention or the apparatus of the second aspect of the invention.

The present invention recognises that a labyrinth seal can be used as a thermal shield to protect heat-sensitive parts of the compressing device; this is especially beneficial when two compressing devices are to be used in series.

Labyrinth seals tend to allow a degree of fluid flow through them, and thus provide imperfect fluid sealing.

It will be appreciated that the compressor wheel need not necessarily be a single piece any may comprise a plurality of sub-elements.

Providing such a seal has been found to protect the drive assembly from the output of the upstream compressing device (for example oil, corrosive gases from the exhaust gas recirculation system, particulates and humidity carried in the compressed air charge), and therefore better enables the second compressing device to be used downstream of a first compressing device. The seal is preferably arranged such that the pressure in the drive assembly is independent of the pressure of the compressed air charge.

The seal is preferably a gas-lubricated face seal. Gas-lubricated face seals are known *per se.* An example of a gas-lubricated face seal is sold by Freudenberg Sealing Technologies.

The present invention is thought to be especially useful for electric superchargers, which may comprise components that are especially susceptible to excessive temperatures.

The moveable part is arranged on (for example integral with) the rear face of the compressor wheel.

The labyrinth seal may be arranged such that the temperature of the compressed charge on the downstream side is 150DegC or lower. The temperature of the compressed charge on the downstream side may be at least 30Deg C below the temperature on the upstream side.

The engine is preferably for use in an automobile. The engine is preferably a relatively small capacity engines. The engine is preferably 4 litres or less, more preferably 3 litres or less, and yet more preferably 2 litres or less). The engine may be in an automobile. The automobile may be less than 5 tonnes, more preferably less than 3.5 tonnes, and more preferably less than 2 tonnes.

### Description of the Drawings

Embodiments of the invention will now be described, by way of example only, with reference to the accompanying schematic drawings of which:
Figure 1 is a schematic showing an engine incorporating an apparatus according to a first embodiment of the invention;
Figure 2 is a sectional perspective view of the supercharger in the first embodiment of the invention; and
Figure 3 is a sectional perspective view of a supercharger in a second embodiment of the disclosure.

### Detailed Description

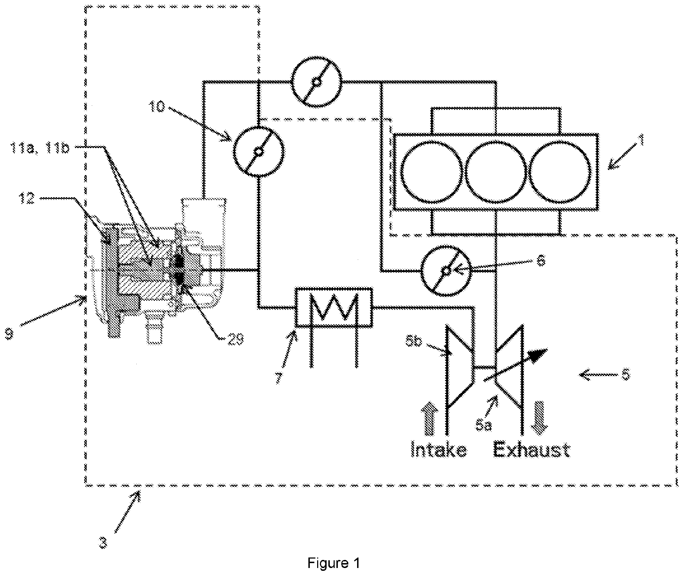

Figure 1 shows a three-cylinder internal combustion (IC) engine 1 in combination with an apparatus 3 for supplying compressed intake gases (i.e. a compressed air charge) in accordance with a first embodiment of the invention. The apparatus 3 (marked by a dotted line) comprises a turbocharger 5, an exhaust gas recirculation (EGR) valve 6, a charge air cooler (CAC) 7, a supercharger 9 and a supercharger bypass valve 10.

In accordance with conventional turbochargers, the turbocharger 5 is driven by the exhaust gases from the engine 1 passing through the Variable-Nozzle Turbine (VNT) 5a thereby driving the turbocharger compressor 5b. Some of the exhaust gas output of the engine 1 is returned as an input to the engine via the EGR valve 6.

The output of the turbocharger 5 is then fed through the CAC 7 before being supplied to the supercharger 9. The supercharger 9 further compresses the output of the turbocharger and supplies the compressed intake gases (referred to herein as a compressed air charge) to the engine 1.

In the first embodiment of the invention, the supercharger 9 is an electric supercharger. Electric superchargers have been found to reduce the fuel consumption and emissions of an engine in comparison to conventional (direct engine-driven) superchargers. They are therefore attractive in applications in which the fuel consumption and/or the carbon dioxide output of the engine are looking to be improved. However, electric superchargers have previously been dismissed for use downstream of a turbocharger because the electric supercharger would suffer from the corrosive effect of the particulates and oil-air mix that are typically output from the turbocharger as well as the EGR gas. Electric superchargers were also thought to be susceptible to damage caused by the high temperature of the compressed charge. In particular, when exposed to temperatures above 150 DegC, at least the bearings have been found to deteriorate or fail.

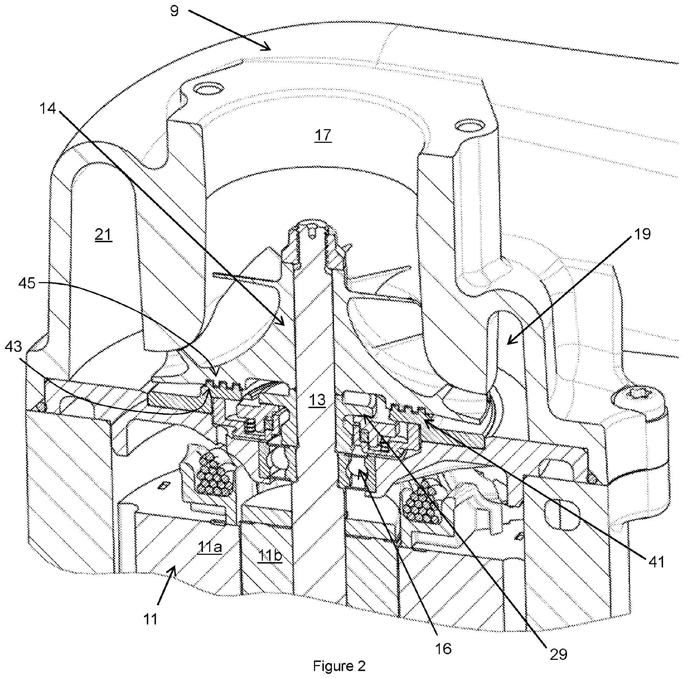

Figure 2 is a sectional perspective view of the electric supercharger 9 in the first embodiment of the invention. The electric supercharger 9 includes an electric drive assembly having a motor 11 (comprising a stator 11a and rotor 11b), and a control unit in the form of a Printed circuit Board (PCB) (not visible in Figure 2) located to the rear of the motor. Power to the electric motor 11 and control unit is supplied by a lead/acid battery (not shown) charged by an alternator (not shown) associated with the engine 1. The drive assembly is arranged to drive the compressor wheel 14 via the shaft 13. The shaft 13 is supported by a front bearing assembly 16 and a rear bearing assembly (not visible in Figure 2).

In common with known superchargers, the supercharger 9 receives air through the inlet 17. The compressor wheel 14 then compresses the inlet air and expels it into the radial chamber 19. Whilst most of the compressed charge passes through the outlet 21, some of the compressed charge leaks back under the compressor wheel 14.

According to the first embodiment of the invention the supercharger comprises a six-stage labyrinth seal 41. The labyrinth seal 41 comprises a lower stationary part 43 having three raised concentric rings. The rings on this lower part 43 interlock with three corresponding, radially offset, rings formed in an upper part 45 that is integral to the rear of the compressor wheel 14. The upper and lower parts 43, 45 do not touch each other and instead define a tortuous path (the labyrinth) between the parts. The present invention recognises that a labyrinth seal 41 can be used as a thermal shield to protect heat-sensitive parts of the supercharger.

In the first embodiment, the radially outermost side of the labyrinth seal 14 is exposed to the compressed charge at a temperature of around 180 DegC. Some of the compressed charge passes through the labyrinth seal 14 and leaves on the radially innermost side. During this process some of the heat in the compressed charge is dissipated and the temperature on the inner (downstream) side of the labyrinth seal is around 140 DegC. This temperature is low enough to prevent damage or wear to the upper bearing assembly 16 and the face seal 29 (see below). The labyrinth seal is thus arranged to thermally shield parts of the supercharger from the heat of the compressed charge. This enables two compressing devices to be used in series to supply the IC engine.

The supercharger 9 of the first embodiment comprises a face seal 29 located behind the compressor 14 and arranged such that the drive assembly 11 is sealed from the compressed air charge. The seal 29 is a gas-lubricated face seal which forms a circumferential seal around the shaft 13 whilst still allowing rotation of the shaft at high rotational speeds (for example up to 80,000 rpm). The face seal 29 is arranged to prevent ingress of the compressed air charge into the electric drive assembly such that the pressure in the drive assembly is independent of the pressure of the compressed charge. The face seal has been found to be especially beneficial when used in an electric supercharger downstream of a turbocharger. The labyrinth seal 14 is arranged to shield the face seal 29 from the full temperature of the compressed charge and therefore reduce heat-induced damage to the seal.

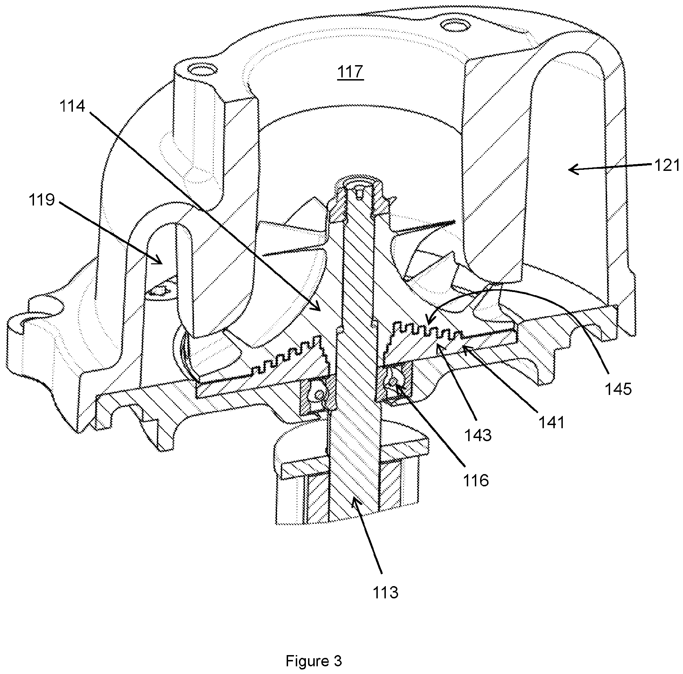

Figure 3 shows the upper portion of a supercharger according to a second embodiment of the disclosure. Features in the second embodiment of the disclosure that correspond to similar features in the first embodiment of the invention, are shown with the same reference numerals as in the first embodiment, but with the addition of the prefix '1' (or '10' where appropriate).

The supercharger 109 of the second embodiment comprises a 15 stage labyrinth seal 141, formed by interlocking concentric rings. Unlike the first embodiment, the rings are located on an inclined slope (increasing in height towards the centre of the labyrinth seal). The supercharger 109 of the second embodiment does not comprise a face seal. Instead the labyrinth seal provide a thermal shield for the bearing assembly 116 and the drive assembly (not shown) downstream of the bearing assembly 116.

The supercharger 109 of the second embodiment is part of a similar apparatus to that shown in Figure 1, except that the intercooler is instead located downstream of the supercharger (and the turbocharger); this means that the compressed charge is especially hot and the thermal shielding afforded by the labyrinth seal is especially important.

## Claims

1. An electric supercharger (9) for supplying an internal combustion engine with a compressed air charge, wherein the electric supercharger (9) comprises a compressor wheel (14), a bearing assembly (16) for supporting rotation of the compressor wheel (14), an electric drive assembly (11) for driving the compressor wheel (14), a seal (29) arranged such that the electric drive assembly (11) is sealed from the compressed air charge, and a labyrinth seal (41),
wherein the labyrinth seal (41) is arranged to thermally shield the seal(29) and bearing assembly (16) from the heat of the compressed air charge, the labyrinth seal (41) comprising a stationary part (43) interlocking with a movable part (45) to define a labyrinth therebetween,
**characterised in that**
the movable part (45) is arranged on the rear of the compressor wheel (14) such that the movable part (45) is rotatable relative to the stationary part (43);
the labyrinth seal (41) is a radial labyrinth seal, the radially outermost side of the labyrinth seal (41) being exposed to the compressed charge, arranged such that the fluid received into a radially outermost side of the labyrinth seal is at a first temperature and fluid leaving the radially innermost side of the labyrinth seal is at a second temperature, the second temperature being lower than the first, and wherein the seal (29) is a face seal.

2. An electric supercharger according to claim 1 wherein the movable part (45) is integral with the rear face of the compressor wheel (14).

3. An apparatus for supplying an internal combustion engine with a compressed air charge, the apparatus comprising a turbocharger (5) and an electric supercharger (9) according to either of claims 1 or 2, the electric supercharger (9) being downstream of the turbocharger (5) and being arranged to compress the output of the turbocharger (5) into the compressed air charge.

4. An internal combustion engine in combination with the electric supercharger of claims 1 or 2 or the apparatus of claim 3.

## Patentansprüche

1. Elektrischer Kompressor (9) zum Versorgen eines Verbrennungsmotors mit einer verdichteten Ladeluft, wobei der elektrische Kompressor (9) umfasst ein Verdichterrad (14), eine Lageranordnung (16) zum Stützen der Drehung des Verdichterrades (14), eine elektrische Antriebsanordnung (11) zum Antreiben des Verdichterrades (14), eine Dichtung (29), die so angeordnet ist, dass die elektrische Antriebsanordnung (11) gegenüber der verdichteten Ladeluft abgedichtet ist, und eine Labyrinthdichtung (41),
wobei die Labyrinthdichtung (41) derart angeordnet ist, dass sie die Dichtung (29) und die Lageranordnung (16) thermisch von der Wärme der verdichteten Ladeluft abschirmt, wobei die Labyrinthdichtung (41) einen feststehenden Teil (43) umfasst, der in einen beweglichen Teil (45) eingreift, um dazwischen ein Labyrinth zu definieren,
**dadurch gekennzeichnet, dass** der bewegliche Teil (45) an der Rückseite des Verdichterrades (14) derart angeordnet ist, dass der bewegliche Teil (45) in Bezug auf den feststehenden Teil (43) drehbar ist;
dass die Labyrinthdichtung (41) eine radiale Labyrinthdichtung (41) ist, wobei die radial äußerste Seite der Labyrinthdichtung (41), die der komprimierten Ladung ausgesetzt ist, derart beschaffen ist, dass das in eine radial äußerste Seite der Labyrinthdichtung aufgenommene Fluid eine erste Temperatur aufweist und das die radial innerste Seite der Labyrinthdichtung verlassende Fluid eine zweite Temperatur aufweist, wobei die zweite Temperatur niedriger ist als die erste, und wobei die Dichtung (29) eine Gleitringdichtung ist.

2. Elektrischer Kompressor nach Anspruch 1, wobei der bewegliche Teil (45) verblockt ist mit der Rückseite des Verdichterrades (14).

3. Vorrichtung zum Versorgen eines Verbrennungsmotors mit einer verdichteten Ladeluft, wobei die Vorrichtung einen Turbolader (5) und einen elektrischen Kompressor (9) nach Anspruch 1 oder 2 umfasst, wobei der elektrische Kompressor (9) stromabwärts des Turboladers (5) vorgesehen ist und angeordnet ist, um den Auslass des Turboladers (5) in die verdichtete Ladeluft zu verdichten.

4. Verbrennungsmotor in Kombination mit dem elektrischen Kompressor nach Anspruch 1 oder 2 oder der Vorrichtung nach Anspruch 3.

## Revendications

1. Compresseur volumétrique électrique (9) pour fournir, à un moteur à combustion interne, une charge d'air comprimé, le compresseur volumétrique électrique (9) comprenant une roue de compresseur (14), un ensemble de palier (16) pour supporter la rotation de la roue de compresseur (14), un ensemble d'entraînement électrique (11) pour entraîner la roue de compresseur (14), un joint (29) agencé de sorte que l'ensemble d'entraînement électrique (11) soit isolé de la charge d'air comprimé, et un joint à labyrinthe (41),
dans lequel le joint à labyrinthe (41) est agencé pour protéger thermiquement le joint (29) et l'ensemble de palier (16) de la chaleur de la charge d'air comprimé, le joint à labyrinthe (41) comprenant une partie fixe (43) s'imbriquant avec une partie mobile (45) pour définir un labyrinthe entre elles,
**caractérisé en ce que**
la partie mobile (45) est agencée sur l'arrière de la roue de compresseur (14) de sorte que la partie mobile (45) puisse tourner par rapport à la partie fixe (43) ;
le joint à labyrinthe (41) est un joint à labyrinthe radial, le côté radialement le plus à l'extérieur du joint à labyrinthe (41) étant exposé à la charge comprimée, agencé de sorte que le fluide reçu dans un côté radialement le plus à l'extérieur du joint à labyrinthe soit à une première température et que le fluide sortant du côté radialement le plus à l'intérieur du joint à labyrinthe soit à une deuxième température, la deuxième température étant inférieure à la première, et le joint (29) étant un joint de face.

2. Compresseur volumétrique électrique selon la revendication 1 dans lequel la partie mobile (45) est d'un seul tenant avec la face arrière de la roue de compresseur (14).

3. Appareil pour alimenter un moteur à combustion interne avec une charge d'air comprimé, l'appareil comprenant un turbocompresseur (5) et un compresseur volumétrique électrique (9) selon l'une ou l'autre des revendications 1 et 2, le compresseur volumétrique électrique (9) étant en aval du turbocompresseur (5) et étant agencé pour comprimer la sortie du turbocompresseur (5) en la charge d'air comprimé.

4. Moteur à combustion interne en combinaison avec le compresseur volumétrique électrique selon les revendications 1 ou 2 ou appareil selon la revendication 3.
